# EUROPEAN PATENT APPLICATION

(11) **EP 3 627 381 A1**
(43) Date of publication of application: **25.03.2020**
(21) Application number: 18211020.5
(22) Date of filing: 07.12.2018
(51) Int. Cl.: G06K 9/00

(54) **METHOD OF FACIAL EXPRESSION GENERATION WITH DATA FUSION AND RELATED DEVICE**

(30) Priority: 19.09.2018 US 201816136241
(71) Applicant: XRSpace CO., LTD., Taoyuan City 330 (TW)
(72) Inventor: Chou, Peter, 100 Taipei City (TW); Chu, Feng-Seng, 235 New Taipei City (TW); Lin, Ting-Chieh, 220 New Taipei City (TW); Wang, Chuan-Chang, 116 Taipei City (TW)
(74) Representative: Straus, Alexander

(57) **Abstract**

A method of facial expression generation by data fusion is disclosed. The method comprises obtaining facial information of a user from a plurality of data sources, wherein the plurality of data sources includes a real-time data detection and a data pre-configuration, mapping the facial information to facial expression parameters for simulating facial geometry model of the user, performing a fusion process according to the facial expression parameters, to generate fusing parameters associated to the facial expression parameters with weighting, and generating a facial expression of an avatar according to the fusing parameters.

## Description

### Field of the Invention

The present disclosure relates to a method, and more particularly, to a method for generating facial expression by data fusion in the virtual reality/augmented reality/mixed reality/extended reality system.

### Background of the Invention

Most virtual reality (VR)/augmented reality (AR)/mixed reality (MR)/extended reality (XR) system can track user's movement within a room-scale area from human interface devices carried by a user. The human interface device (e.g. joystick, controller, touchpad, etc.) is used for the user to interact with a software system, for example, a VR game, executed by a computing device. In addition, a head-mounted display (HMD) worn by the user is used for displaying the interacting images generated by the computing device to the user for VR experience.

In order to increase user's willingness of VR immersion, a VR avatar (i.e. a representative of the user in the virtual environment) with facial expression (e.g. neutral, happy, angry, surprise, and sad) is proposed to reveal user's feeling in real-time for social communication. However, synchronization of the VR avatar's expressions with the HMD user is limited. Previous researches often extract facial features from image sequences collected by a camera for recognizing facial expression. The major problem of wearing an HMD is that a large portion of the user's face is occupied and his/her muscle movement is restricted, which makes camera-based facial recognition difficult in VR system.

### Summary of the Invention

This in mind, the application aims at providing a method of facial expression generation in a virtual reality/augmented reality/mixed reality/extended reality system in order to solve the above mentioned problems.

This is achieved by a method for facial expression generation according to claims 1, 8 and 15. The dependent claims pertain to corresponding further developments and improvements.

As will be seen more clearly form the detailed description following below, the claimed method of facial expression generation by data fusion comprises obtaining facial information of a user from a plurality of data sources, wherein the plurality of data sources includes a real-time data detection and a data pre-configuration, mapping the facial information to facial expression parameters for simulating facial geometry model of the user, performing a fusion process according to the facial expression parameters, to generate fusing parameters associated to the facial expression parameters with weighting, and generating a facial expression of an avatar according to the fusing parameters.

### Brief Description of the Drawings

FIG. 1 is a schematic diagram of a virtual reality system.
FIG. 2 is a schematic diagram of a virtual reality device of a virtual reality system according to an embodiment of the present disclosure.
FIG. 3 is a flowchart according to an embodiment of the present disclosure.

### Detailed Description

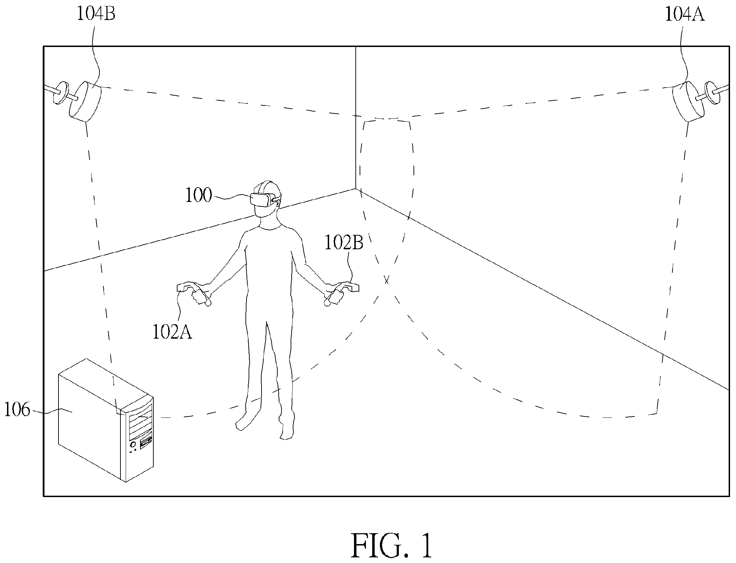

Please refer to FIG. 1, which is a schematic diagram of a virtual reality system according to one embodiment of the present disclosure. Note that, the present invention is not limited to virtual reality system, which could be any system, such as augmented reality (AR), mixed reality (MR), and extended reality (XR) system. The virtual reality (VR) system (i.e. HTC VIVE) allows users to move and explore freely in the VR environment. In detail, the VR system includes a head-mounted display (HMD) 100, controllers 102Aand 102B, lighthouses 104A and 104B, and a computing device 106 (e.g. a personal computer). The lighthouses 104A and 104B are used for emitting IR lights, the controllers 102Aand 102B are used for generating control signals to the computing device 106, so that a player can interact with a software system, VR game, executed by the computing device 106, and the HMD 100 is used for display interacting images generated by the computing device 106 to the player. The operation of VR system should be well known in the art, so it is omitted herein. In other embodiment, at least two of the HMD 100, the controllers 102A and 102B, the lighthouses 104A and 104B, and the computing device 106 of the virtual reality system can be integrated in an all-in-one device or a cloud-based device. The all-in-one device can be a HMD that combines display, face tracking, storage and computing functions without the need to connect to the cloud, and performs all storage and/or computational steps in a processing unit of the all-in-one device. The cloud-based device can be a HMD that combines display, face tracking, storage and computing functions, and is connected to the cloud, and performs all or part of the storage and/or computational steps in the cloud, to reduce the burden of storage/computing/database establishment.

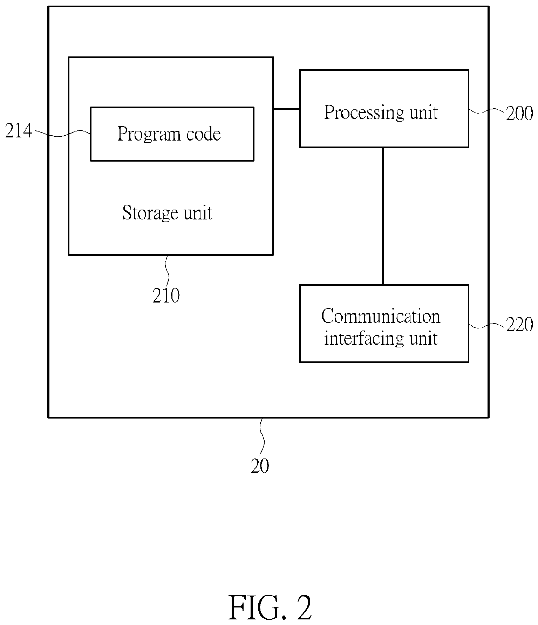

FIG. 2 is a schematic diagram of a VR device according to one embodiment of the present disclosure. The VR device 20 may be the computing device 106 of FIG. 1, and includes a processing unit 200, such as a microprocessor or Application Specific Integrated Circuit (ASIC), a storage unit 210 and a communication interfacing unit 220. The storage unit 210 may be any data storage device that can store a program code 214, for access by the processing unit 200. Examples of the storage unit 210 include but are not limited to a subscriber identity module (SIM), read-only memory (ROM), flash memory, random-access memory (RAM), CD-ROMs, magnetic tape, hard disk, and optical data storage device. The communication interfacing unit 220 is applied with a wire or wireless communication for exchange signals with the HMD 100 and controllers 102A and 102B of FIG. 1 according to processing results of the processing unit 200.

To overcome abovementioned problem, the present disclosure takes different data sources into consideration for facial expression generation. Data resources include real-time data collected by a tracking device/unit (not shown in figures) of the VR system and pre-configured data generated by the computing device 106 of the VR system. For example, the tracking device/unit includes sensors wore by the user (i.e. attached inside the HMD 100) for detecting the user's facial muscle activities, and/or sensors deployed in a room-scale area for recording the voice of the user. Those sensors may include, without limitation, ultrasound detection, current/voltage sensor, infrared sensor, and eyeball/iris/ pupil detection, strain gauge, camera and sound recording (i.e. a camera pointed at the lower half of the user's face, to detect user's muscle movements along with speaking). Consequently, the VR system of the present disclosure enables generation of facial expressions that correspond to the user's emotional changes, so as to synchronize the facial expression of the avatar with the user's facial expression while the user is wearing the HMD 100.

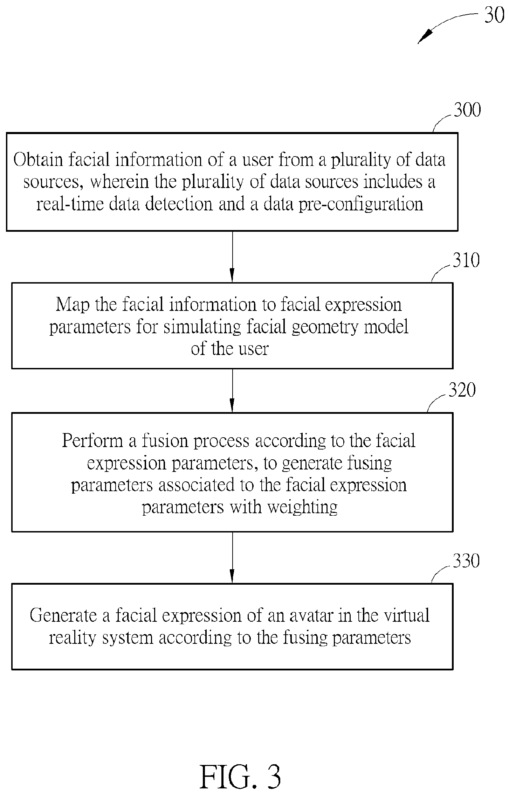

Reference is made to FIG. 3. A flowchart of a process 30 according to an embodiment of the present disclosure is illustrated. The process 30 could be utilized in the VR device 20 of FIG. 2 for facial expression generation. The process 30 may be compiled into a program code 214 to be stored in the storage unit 210, and may include the following steps:
Step 300: Obtain facial information of a user from a plurality of data sources, wherein the plurality of data sources includes real-time data detection and a data pre-configuration;
Step 310: Map the facial information to facial expression parameters for simulating facial geometry model of the user.
Step 320: Perform a fusion process according to the facial expression parameters, to generate fusing parameters associated to the facial expression parameters with weighting.
Step 330: Generate a facial expression of an avatar in the virtual reality system according to the fusing parameters.

According to the process 30, the VR device 20 (e.g. computing device 106) generates facial expressions for an avatar in the VR environment from real-time data and predetermined data. In an embodiment, the real-time data includes raw data collected from an image of part or whole face of the user, user's facial feature movement (e.g. eyebrow, eye, nose, and mouth), and from user's speaking speech (e.g. tone of voice and speed of the speaking). In one embodiment, the predetermined data includes a blink or nod within a predetermined interval or randomly generated facial features.

In an embodiment, multiple data sources are applied with various independent tracking devices/unit/sensors collaborated together to provide more reliable decisions. With diverse data sources, for example speaking speech, the VR device 20 applies the detected voice/tone for speech analysis, such that mouth shape of the avatar could be generated more precisely and the speaking contents could be displayed. Therefore, combination of different types of data actually enhances facial animation of the avatar, whereby the emotion of the user is shown for interacting with other players in the VR environment.

In addition, after obtaining the facial information (e.g. the real-time data and predetermined data) from multiple data sources, the VR device 20 maps these raw data to the facial expression parameters for illustrating the facial features of the user. In a word, the facial expression parameters is used for indicating information of facial features including at least one of eyebrow, wrinkles, eye, mouth, teeth, tongue, nose of the user, frequency of blinking, eye movement direction, pupil size and head six-dimensional information. For example, the information indicated by the facial expression parameters includes:
1. Upper teeth visible - Presence or absence of visibility of upper teeth.
2. Lower teeth visible - Presence or absence of visibility of lower teeth.
3. Forehead lines - Presence or absence of wrinkles in the upper part of the forehead.
4. Eyebrow lines - Presence or absence of wrinkles in the region above the eyebrows.
5. Nose lines - Presence or absence of wrinkles in the region between the eyebrows extending over the nose.
6. Chin lines - Presence or absence of wrinkles or lines on the chin region just below the lower lip.
7. Nasolabial lines - Presence or absence of thick lines on both sides of the nose extending down to the upper lip.

Alternatively, there are some facial expression parameters are associated to user's speaking, such as high or low pitch, slow speaking or fast speaking. That is, the VR device 20 maps the collected voice information to the corresponding facial expression parameters, which may be useful for mouth shape simulation.

With abovementioned facial expression parameters, the facial features of the user could be depicted.

More specifically, the facial expression parameters include geometry parameters and texture parameters. The geometry parameters indicates the 3D coordinates of vertices on the facial geometry model, and the texture parameters indicates which facial image corresponding to the emotion model should be pasted to which location on the facial geometry model.

Note that, the VR device 20 may further perform a facial expression recognition operation according to the facial information, to obtain an emotion model of the user, and then maps the facial information to the facial expression parameters according to the obtained emotion model. In detail, the facial expression recognition operation for determining the emotion model is based on a tree-based classification manner, which is applied with distances analysis of the facial information, or a machine learning classification manner, which is applied with facial expression images analysis from a database and with the facial information.

As abovementioned, raw data are collected with different type of sensors, which may tracks geometric changes of user's face by measuring distance corresponding to every facial feature (e.g. the presence of nasal root wrinkles, shapes of eye, mouth teeth, tongue and nose, etc.). In accordance with the measured distances, the VR device 20 maps the raw data into the facial expression parameters with the determined emotion model. The distances applied for the facial expression recognition operation may include the following parameters:
1. Eyebrow raise distance - The distance between the junction point of the upper and the lower eyelid and the lower central tip of the eyebrow.
2. Upper eyelid to eyebrow distance - The distance between the upper eyelid and eyebrow surface.
3. Inter-eyebrow distance - The distance between the lower central tips of both the eyebrows.
4. Upper eyelid - lower eyelid distance - The distance between the upper eyelid and lower eyelid.
5. Top lip thickness - The measure of the thickness of the top lip.
6. Lower lip thickness - The measure of the thickness of the lower lip.
7. Mouth width - The distance between the tips of the lip corner.
8. Mouth opening - The distance between the lower surface of top lip and upper surface of lower lip.

Based on the distances analysis, the VR device 20 is able to determine the emotion model of the user. For example, if the upper eyelid to eyebrow distance is lower than a threshold, the VR device 20 may determine that the user is in a shock or happy. In addition, if the mouth opening is higher than a threshold, the VR device 20 may confirm that the user is in the shock. However, there may be different or conflict emotion models (shock vs. happy) are determined by the VR device 20.

After mapping the facial information to the facial expression parameters, the VR device 20 performs the fusion process for configuring different weightings to the facial expression parameters, so as to generate a facial expression corresponding to the emotion of the user for the avatar.

The fusion process is implemented with the abovementioned facial expression recognition (i.e. universal emotions: joy, surprise, disgust, sadness, anger, fear as well as to the neutral expression) with consideration of multiple facial regions, such as shapes of mouth, eyes, eyebrows, and wrinkles, which is indicated by abovementioned facial expression parameters. In a word, the fusion process takes facial features such as mouth and eyes as a separate study for facial expression analysis (namely emotion determination). If there is emotion/intention collision between these facial features, the fusion process may determine new weightings for the facial expression parameters, to reconstruct the facial expression for the avatar.

Emotion/intention collision may occur between facial features, such as the eyes are blinking upon smiling, or results from two contrary emotions (happiness vs. sadness) in the facial expression recognition. In this situation, the VR device 20 accordingly generates the fusing parameters (namely facial expression parameters with lighter or heavier weightings), so as to reconstruct a proper face expression for the avatar. In other words, to make the determined emotion result more influential, fusion process can be used for reducing or even removing doubt in facial expression display.

Note that, the facial expression recognition of the fusion process may be realized according to emotion models of a database established in the VR device with assistance of optical flow or geometric-based approach manner. That is, the emotion of the user may be determined, without limitation, based on optical flow analysis from facial muscle activities, or model based approaches. This should be well known in the art, so it is omitted herein.

The abovementioned steps of the processes including suggested steps can be realized by means that could be a hardware, a firmware known as a combination of a hardware device and computer instructions and data that reside as read-only software on the hardware device or an electronic system. Examples of hardware can include analog, digital and mixed circuits known as microcircuit, microchip, or silicon chip. Examples of the electronic system can include a system on chip (SOC), system in package (SiP), a computer on module (COM) and the VR device 20.

In conclusion, the present disclosure addresses to imitate user's facial expression to interact other player's avatars for real-time social interactions in the virtual environment. In detail, multiple data resources including real-time data and pre-configuration data are applied for generating facial expression of the avatar along with data fusion.

## Claims

1. A method of facial expression generation by data fusion, **characterized by** the method comprising:
obtaining facial information of a user from a plurality of data sources, wherein the plurality of data sources includes a real-time data detection and a data pre-configuration;
mapping the facial information to facial expression parameters for simulating a facial geometry model of the user;
performing a fusion process according to the facial expression parameters, to generate fusing parameters associated to the facial expression parameters with weighting; and
generating a facial expression of an avatar according to the fusing parameters.

2. The method of claim 1, **characterized in that** mapping the facial information to the facial expression parameters for simulating the facial geometry model of the user comprises:
performing a facial expression recognition operation according to the facial information, to obtain an emotion model of the user; and
mapping the facial information to the facial expression parameters according to the obtained emotion model.

3. The method of claim 2, **characterized in that** the facial expression parameters include geometry parameters and texture parameters, the geometry parameters indicates the 3D coordinates of vertices on the facial geometry model, and the texture parameters indicates which facial image corresponding to the emotion model should be pasted to which location on the facial geometry model.

4. The method of claim 2, **characterized in that** performing the facial expression recognition operation according to the facial information comprises:
performing the facial expression recognition operation for determining the emotion model of the user based on a tree-based classification manner with distances extracted from the facial information; or
performing the facial expression recognition operation for determining the emotion model of the user based on a machine learning classification manner with facial expression images from a database and the facial information.

5. The method of claim 4, **characterized in that** performing the fusion process according to the facial expression parameters comprises:
determining whether an emotion collision occurs based on the mapped facial expression parameters; and
generating fusing parameters with configured weightings for the facial expression parameters when the emotion collision occurs.

6. The method of claim 1, **characterized in that** the data sources include a facial muscle activity, a speaking speech, an image of part or whole face, and a predefined or randomly generated facial feature.

7. The method of claim 1, **characterized in that** the facial expression parameters indicating information of facial features including at least one of eyebrow, wrinkles, eye, mouth, teeth, tongue, nose of the user, frequency of blinking, eye movement direction, pupil size and head six-dimensional information.

8. A head-mounted display, HMD, for facial expression generation with data fusion, the HMD comprising:
a processing unit for executing a program;
a storage unit coupled to the processing unit for storing the program; and
a tracking unit, connecting to the processing unit, for collecting facial information of a user from a plurality of data sources, wherein the plurality of data sources includes a real-time data detection and a data pre-configuration;
**characterized in that** the program instructs the processing unit or a cloud to perform the following steps, or instructs the processing unit or the cloud to perform a part of the following steps in the processing unit and perform the other part of the following steps in the cloud:
obtaining facial information from the tracking unit;
mapping the facial information to facial expression parameters for simulating a facial geometry model of the user;
performing a fusion process according to the facial expression parameters, to generate fusing parameters associated to the facial expression parameters with weighting; and
generating a facial expression of an avatar according to the fusing parameters.

9. The HMD of claim 8, **characterized in that** the program further instructs the processing unit and/or the cloud to perform the step of:
performing a facial expression recognition operation according to the facial information, to obtain an emotion model of the user; and
mapping the facial information to the facial expression parameters according to the obtained emotion model.

10. The HMD of claim 9, **characterized in that** the facial expression parameters include geometry parameters and texture parameters, the geometry parameters indicates the 3D coordinates of vertices on the facial geometry model, and the texture parameters indicates which facial image corresponding to the emotion model should be pasted to which location on the facial geometry model.

11. The HMD of claim 9, **characterized in that** the program further instructs the processing unit and/or the cloud to perform the step of:
performing the facial expression recognition operation for determining the emotion model of the user based on a tree-based classification manner with distances extracted from the facial information; or
performing the facial expression recognition operation for determining the emotion model of the user based on a machine learning classification manner with facial expression images from a database and the facial information.

12. The HMD of claim 11, **characterized in that** the program further instructs the processing unit and/or the cloud to perform the step of:
determining whether an emotion collision occurs based on the mapped facial expression parameters; and
generating fusing parameters with configured weightings for the facial expression parameters when the emotion collision occurs.

13. The HMD of claim 8, **characterized in that** the data sources include a facial muscle activity, a speaking speech, an image of part or whole face, and a predefined or randomly generated facial feature.

14. The HMD of claim 8, **characterized in that** the facial expression parameters indicating information of facial features including at least one of eyebrow, wrinkles, eye, mouth, teeth, tongue, nose of the user, frequency of blinking, eye movement direction, pupil size and head six-dimensional information.

15. A system for facial expression generation with data fusion, the system comprising:
a computing device, for executing a software system to generate images;
a head-mounted display, HMD, connecting to the computing device, for displaying an image to an user; and
a plurality of tracking devices, connecting to the computing device, for collecting facial information of the user from a plurality of data sources, wherein the plurality of data sources includes a real-time data detection and a data pre-configuration;
wherein the computing device includes:
a processing unit for executing a program; and
a storage unit coupled to the processing unit for storing the program;
**characterized in that** the program instructs the processing unit to perform the following steps:
obtaining facial information from the plurality of tracking devices;
mapping the facial information to facial expression parameters for simulating a facial geometry model of the user;
performing a fusion process according to the facial expression parameters, to generate fusing parameters associated to the facial expression parameters with weighting; and
generating a facial expression of an avatar in the system according to the fusing parameters.

## Amended claims

### Amended claims in accordance with Rule 137(2) EPC.

1. A method of facial expression generation by data fusion, **characterized by** the method comprising:
obtaining facial information of a user from a plurality of data sources, wherein the plurality of data sources includes a real-time data detection and a data pre-configuration, which comprises at least one of a randomly generated facial feature and a predefined facial feature within a predetermined interval;
mapping the facial information to facial expression parameters for simulating a facial geometry model of the user;
performing a fusion process according to the facial expression parameters, to generate fusing parameters associated to the facial expression parameters with weighting; and
generating a facial expression of an avatar according to the fusing parameters.

2. The method of claim 1, **characterized in that** mapping the facial information to the facial expression parameters for simulating the facial geometry model of the user comprises:
performing a facial expression recognition operation according to the facial information, to obtain an emotion model of the user; and
mapping the facial information to the facial expression parameters according to the obtained emotion model.

3. The method of claim 2, **characterized in that** the facial expression parameters include geometry parameters and texture parameters, the geometry parameters indicates the 3D coordinates of vertices on the facial geometry model, and the texture parameters indicates which facial image corresponding to the emotion model should be pasted to which location on the facial geometry model.

4. The method of claim 1, **characterized in that** the data sources include at least one of a facial muscle activity, a speaking speech, and an image of part or whole face.

5. The method of claim 1, **characterized in that** the facial expression parameters indicating information of facial features including at least one of eyebrow, wrinkles, eye, mouth, teeth, tongue, nose of the user, frequency of blinking, eye movement direction, pupil size and head six-dimensional information.

6. A head-mounted display, HMD, for facial expression generation with data fusion, the HMD comprising:
a processing unit for executing a program;
a storage unit coupled to the processing unit for storing the program; and
a tracking unit, connecting to the processing unit, for collecting facial information of a user from a plurality of data sources, wherein the plurality of data sources includes a real-time data detection and a data pre-configuration, which comprises at least one of a randomly generated facial feature and a predefined facial feature within a predetermined interval;
**characterized in that** the program instructs the processing unit or a cloud to perform the following steps, or instructs the processing unit or the cloud to perform a part of the following steps in the processing unit and perform the other part of the following steps in the cloud:
obtaining facial information from the tracking unit;
mapping the facial information to facial expression parameters for simulating a facial geometry model of the user;
performing a fusion process according to the facial expression parameters, to generate fusing parameters associated to the facial expression parameters with weighting; and
generating a facial expression of an avatar according to the fusing parameters.

7. The HMD of claim 6, **characterized in that** the program further instructs the processing unit and/or the cloud to perform the step of:
performing a facial expression recognition operation according to the facial information, to obtain an emotion model of the user; and
mapping the facial information to the facial expression parameters according to the obtained emotion model.

8. The HMD of claim 7, **characterized in that** the facial expression parameters include geometry parameters and texture parameters, the geometry parameters indicates the 3D coordinates of vertices on the facial geometry model, and the texture parameters indicates which facial image corresponding to the emotion model should be pasted to which location on the facial geometry model.

9. The HMD of claim 6, **characterized in that** the data sources include at least one of a facial muscle activity, a speaking speech, and an image of part or whole face.

10. The HMD of claim 6, **characterized in that** the facial expression parameters indicating information of facial features including at least one of eyebrow, wrinkles, eye, mouth, teeth, tongue, nose of the user, frequency of blinking, eye movement direction, pupil size and head six-dimensional information.

11. A system for facial expression generation with data fusion, the system comprising:
a computing device, for executing a software system to generate images;
a head-mounted display, HMD, connecting to the computing device, for displaying an image to an user; and
a plurality of tracking devices, connecting to the computing device, for collecting facial information of the user from a plurality of data sources, wherein the plurality of data sources includes a real-time data detection and a data pre-configuration, which comprises at least one of a randomly generated facial feature and a predefined facial feature within a predetermined interval;
wherein the computing device includes:
a processing unit for executing a program; and
a storage unit coupled to the processing unit for storing the program;
**characterized in that** the program instructs the processing unit to perform the following steps:
obtaining facial information from the plurality of tracking devices;
mapping the facial information to facial expression parameters for simulating a facial geometry model of the user;
performing a fusion process according to the facial expression parameters, to generate fusing parameters associated to the facial expression parameters with weighting; and
generating a facial expression of an avatar in the system according to the fusing parameters.

12. The method of claim 1, wherein performing the fusion process according to the facial expression parameters, to generate fusing parameters associated to the facial expression parameters with weighting comprises:
performing a facial expression recognition operation on the facial expression parameters, to determine an emotion model for each of the facial expression parameters; and
configuring weights to the facial expression parameters according to the determined emotion model for each of the facial expression parameters, to generate the fusing parameters.

13. The HMD of claim 6, wherein the program further instructs the processing unit or the cloud to perform the step of:
performing a facial expression recognition operation on the facial expression parameters, to determine an emotion model for each of the facial expression parameters; and
configuring weights to the facial expression parameters according to the determined emotion model for each of the facial expression parameters, to generate the fusing parameters.

14. The system of claim 11, wherein the program further instructs the processing unit to perform the step of:
performing a facial expression recognition operation on the facial expression parameters, to determine an emotion model for each of the facial expression parameters; and
configuring weights to the facial expression parameters according to the determined emotion model for each of the facial expression parameters, to generate the fusing parameters.
